(19) Europäisches Patentamt
European Patent Office
Office européen des brevets

(11) **EP 4 618 473 A1**

(12) **EUROPEAN PATENT APPLICATION**

(43) Date of publication:
**17.09.2025 Bulletin 2025/38**

(21) Application number: **25163575.1**

(22) Date of filing: **13.03.2025**

(51) International Patent Classification (IPC):
**H04L 9/30** $^{(2006.01)}$ **H04L 9/32** $^{(2006.01)}$

(52) Cooperative Patent Classification (CPC):
**H04L 9/3026; H04L 9/3247**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2024 IN 202421019145**

(71) Applicant: **Tata Consultancy Services Limited Maharashtra (IN)**

(72) Inventors:
• **SYED, Habeeb Basha**
  **500001 Hyderabad (IN)**
• **SINGH DILIP THAKUR, Meena**
  **560066 Bengaluru (IN)**
• **BHATTACHAR, Rajan Mindigal**
  **560009 Bangalore (IN)**
• **SINGHA, Subhadip**
  **560009 Bangalore (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **METHOD AND SYSTEM FOR GENERATING AND VERIFYING DIGITAL SIGNATURE USING POLYNOMIAL MATRICES**

(57) This disclosure relates generally to cryptography and more particularly to a method and system for generating and verifying digital signature using polynomial matrices. Already available techniques for generating digital signature are easy to solve on a quantum computer. The disclosed method for digital signature generation is based on multivariate quadratic systems over finite fields and generates digital signatures with small size and computations are very lightweight which may be performed in all hardware platforms. The disclosed method uses matrix consisting of linear multivariate polynomial to define a private key and further uses the square of the private key matrix to define a public key polynomials. Further, the method uses matrices consisting of constants chosen randomly from finite field and uses a random matrix for digital signature generation. The digital signatures created are very small in size approximately in 100 bytes.

200

| Receiving a security parameter characterizing a level of security expected from a digital signature to be generated | — 202 |

| Determining a set of parameters based on the security parameter | — 204 |

| Generating a public key and a private key for a first party | — 206 |

| Generating a digital signature on a message for the first party using the generated private key | — 208 |

| Verifying the digital signature for a second party using the public key by solving a set of quadratic polynomials corresponding to the public key | — 210 |

FIG. 2

EP 4 618 473 A1

**Description**

CROSS-REFERENCE TO RELATED APPLICATIONS AND PRIORITY

The present application claims priority to Indian application no. 202421019145, filed on 15 March 2024.

TECHNICAL FIELD

The disclosure herein generally relates to cryptography, and, more particularly, to a method and system for generating and verifying digital signature using polynomial matrices.

BACKGROUND

Digital Signatures are critical components of modern cryptography which are used to establish authenticity as well as originality of online communications. Few applications of digital signatures are: identify participants in online activities, securely conduct e-commerce transactions, sign e-mails to protect their integrity, authenticate documents like tax returns, partnership deeds, official records and the like. Digital signatures are based on public key cryptography, and consists of three algorithms the KeyGen algorithm, the sign algorithm, and the verify algorithm. The KeyGen algorithm is a probabilistic algorithm which takes as input a security parameter and outputs a pair of private and public keys. The sign algorithm takes as input the private key and a data file to be signed and outputs a signature. Examples of data files are word documents, excel sheets, Emails etc. The verify algorithm takes as input the data file, a signature and public key and returns a verify bit. The signature is accepted as valid if and only if the bit is 1.

There are several digital signature schemes in use. For example, Rivest-Shamir-Adleman (RSA), Elliptic Curve Digital Signature Algorithm (ECDSA), Crystals-Dilithium (based on Lattices), SPHINCS (based on Hash Functions), Oil-Vinegar (based on MQ-Systems) etc. Every digital signature scheme is based on a hard mathematical problem. For example, RSA is based on computational hardness of integer factorization and ECDSA is based on hardness of computing discrete logarithms. However, both these problems are easy to solve on a quantum computer using Shor's algorithm. Some of earlier mentioned schemes like Crystals Dilithium, SPHINCS, Falcon are considered to be quantum secure.

SUMMARY

Embodiments of the present disclosure present technological improvements as solutions to one or more of the above-mentioned technical problems recognized by the inventors in conventional systems. For example, in one embodiment, a method for generating and verifying digital signature using polynomial matrices is provided. The method includes receiving a security parameter characterizing a level of security expected from a digital signature to be generated. Further, the method includes, determining a set of parameters based on the security parameter, wherein the set of parameters comprising a power of a prime number (q), a number of variables ($n$), and a number of quadratic polynomials ($m^2$) in a public key. Furthermore, the method includes, generating the public key, and a private key for a first party based on (i) a linear polynomial matrix of multi-dimension with the number of variables, and (ii) a non-singular matrix of multi-dimension over a finite field ($F_q$). Further, the method includes, generating for the first party a digital signature on a message using the generated private key based on solving a set of linear equations corresponding to the linear polynomial matrix with a first matrix and finally, verifying the digital signature for a second party using the public key by solving a set of quadratic polynomials corresponding to the public key.

In another aspect, a system for generating and verifying digital signature using polynomial matrices is provided. The system comprises memory storing instructions; one or more communication interfaces; and one or more hardware processors coupled to the memory via the one or more communication interfaces, wherein the one or more hardware processors are configured by the instructions to receive a security parameter characterizing a level of security expected from a digital signature to be generated. Further, the system includes, determining a set of parameters based on the security parameter, wherein the set of parameters comprising a power of a prime number (q), a number of variables ($n$), and a number of quadratic polynomials ($m^2$) in a public key. Furthermore, the system includes, generating the public key, and a private key for a first party based on (i) a linear polynomial matrix of multi-dimension with the number of variables, and (ii) a non-singular matrix of multi-dimension over a finite field ($F_q$). Further, the system includes, generating for the first party a digital signature on a message using the generated private key based on solving a set of linear equations corresponding to the linear polynomial matrix with a first matrix and finally, verifying the digital signature for a second party using the public key by solving a set of quadratic polynomials corresponding to the public key.

The public key and the private key are generated by initially generating the linear polynomial matrix from a set of linear polynomials and then computing a second matrix (F) by performing a matrix multiplication of the linear polynomial matrix. Further, the second matrix ($F$) is updated using a non-singular matrix and finally, generating (i) the private key from the linear polynomial matrix and the non-singular matrix, and (ii) the public key from the updated second matrix.

The digital signature on the message is generated by initially selecting a nonce value and then performing a double hash on a cryptographic hash function on message and the nonce value to obtain a third matrix ($H$). Further, a fourth matrix ($J$) is computed from the third matrix ($H$) and a fifth matrix, and then the first matrix ($U$) is computed from the third matrix ($H$), the fifth matrix, and the non-singular matrix. Further, the set of linear equations derived from (i) the linear polynomial matrix, and (ii) the first matrix ($U$), is solved using a standard linear algebra technique to obtain a solution. Finally, the digital signature is generated using the nonce value, the fourth matrix ($J$), and the non-singular matrix.

The digital signature is verified for the second party by initially, receiving the public key, the message, and the digital signature from the first party and then substituting the number of variables in each quadratic polynomial of the updated second matrix with the solution to obtain a sixth matrix. Further, a matrix addition of fourth matrix ($J$) and a G matrix is performed, and the matrix addition is verified as one of (i) true, or (ii) false.

In yet another aspect, there is provided a computer program product comprising a non-transitory computer readable medium having a computer readable program embodied therein, wherein the computer readable program, when executed on a computing device causes the computing device for generating and verifying digital signature using polynomial matrices by receiving a security parameter characterizing a level of security expected from a digital signature to be generated. Further, the computer readable program includes, determining a set of parameters based on the security parameter, wherein the set of parameters comprising a power of a prime number ($q$), a number of variables ($n$), and a number of quadratic polynomials ($m^2$) in a public key. Furthermore, the computer readable program includes, generating the public key, and a private key for a first party based on (i) a linear polynomial matrix of multi-dimension with the number of variables, and (ii) a non-singular matrix of multi-dimension over a finite field ($F_q$). Further, the computer readable program includes, generating for the first party a digital signature on a message using the generated private key based on solving a set of linear equations corresponding to the linear polynomial matrix with a first matrix and finally, verifying the digital signature for a second party using the public key by solving a set of quadratic polynomials corresponding to the public key.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for generating and verifying a digital signature using polynomial matrices, according to some embodiments of the present disclosure.

FIG. 2 is an exemplary flow diagram illustrating a method 200 for generating and verifying the digital signature using polynomial matrices, according to some embodiments of the present disclosure.

FIG. 3 illustrates steps for generating a public key and a private key for a first party, according to some embodiments of the present disclosure.

FIG. 4 illustrates steps for generating the digital signature for a message using the generated private key, according to some embodiments of the present disclosure.

FIG. 5 illustrates steps for verifying the digital signature for a second party using the public key according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Current techniques used for digital signature generation are based on Rivest-Shamir-Adleman (RSA) or elliptic curve cryptography (ECC). These techniques are not quantum safe and can be easily broken by a quantum computer. The disclosed method for digital signature generation is based on multivariate quadratic systems over finite fields, which is also known as MQ-systems. Already known multivariate quadratic systems generate large size signatures with more complex computations. However, the disclosed method generates digital signatures with very small size and additionally the computations required in the process of digital signature generation is very lightweight which can be performed in all available hardware platforms.

Embodiments of the present disclosure, provides a method for generating and verifying digital signatures using polynomial matrices. The disclosed method uses matrix consisting of linear multivariate polynomial to define a private key and further uses the square of the private key matrix to define a public key polynomials. The disclosed method uses matrices consisting of constants chosen randomly from finite field $(F_q)$ to hide the public key polynomials and further uses a nonce as well as a random matrix while computing the digital signature on a given message. The disclosed method uses matrices with multivariate polynomials to define private and public keys. This results in computing the keys very securely. More over this results in very small digital signatures (of size approximate 100 bytes).

In the embodiments of the present disclosure, polynomial in one variable $X$ represents an expression of the form $aX^2 + bX + c$ and multivariate polynomial is a polynomial in multiple variables. For example, if there are two variables $X_1$ and $X_2$, then an example of the multivariate polynomial is $X_1^2 + 3X_1X_2 + X_2^2$. In general, the embodiments of the present disclosure deal with polynomials with number of variables not less than 64.

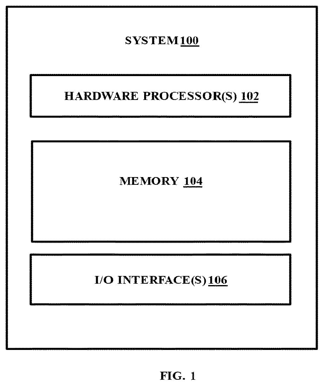

Referring now to the drawings, and more particularly to FIG. 1 through FIG. 5, where similar reference characters denote corresponding features consistently throughout the figures, there are shown preferred embodiments and these embodiments are described in the context of the following exemplary system and/or method.

FIG. 1 illustrates an exemplary block diagram of a system 100 configured for generating and verifying digital signature using polynomial matrices according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

In an embodiment, the memory 104 includes a plurality of modules (not shown) that can include modules such as a key generator, a digital signature generator, a digital signature verifier and the like. The plurality of modules includes programs or coded instructions that supplement applications or functions performed by the system 100 for executing different steps involved in the process of generation and verification of the digital signature being performed by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules (not shown).

Further, the memory 104 may include a database or repository. The memory 104 may comprise information pertaining to input(s)/output(s) of each step performed by the processor(s) 102 of the system 100 and methods of the present disclosure. In an embodiment, the database may be external (not shown) to the system 100 and coupled via the I/O interface 106.

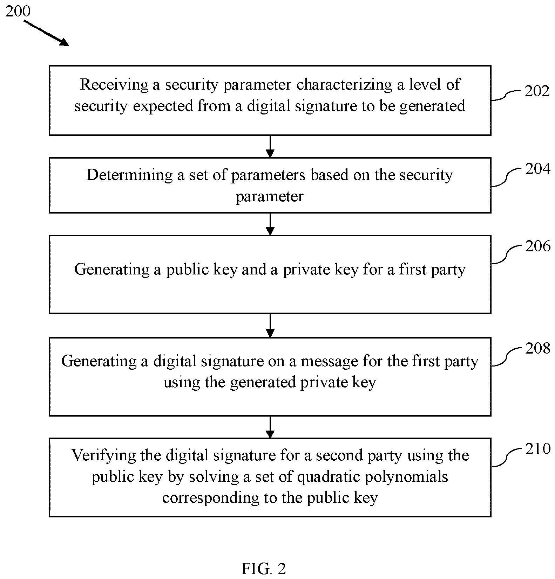

FIG. 2 is an exemplary flow diagram illustrating a method 200 for generating and verifying digital signature using polynomial matrices according to some embodiments of the present disclosure. In an embodiment, the system 100 comprises one or more data storage devices or the memory 104 operatively coupled to the one or more hardware processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2, at step 202 of the method 200, one or more hardware processors are configured to receive a security parameter characterizing a level of security expected from a digital signature to be generated. As an example, the security parameter may be 128, 192, 256 and the like which is according to global standards.

Further at step 204 of the method 200, the one or more hardware processors are configured to determine a set of parameters based on the security parameter. The level of security can be quantified using the set of parameters which includes a power of a prime number ($q = p^r$), where $p$ is the prime number, a number of variables ($n$), and a number of quadratic polynomials ($m^2$) in a public key. Here q represents the size of finite field represented by ($F_q$) for future references. As an example, if the security parameter is 128, one example for the set of parameters is $q = 3$, $n = 81$, and $m^2 = 81$. However, any number of examples for the set of parameters are possible for a security parameter. The set of parameters are determined based on factors such as system configuration, bandwidth and so on.

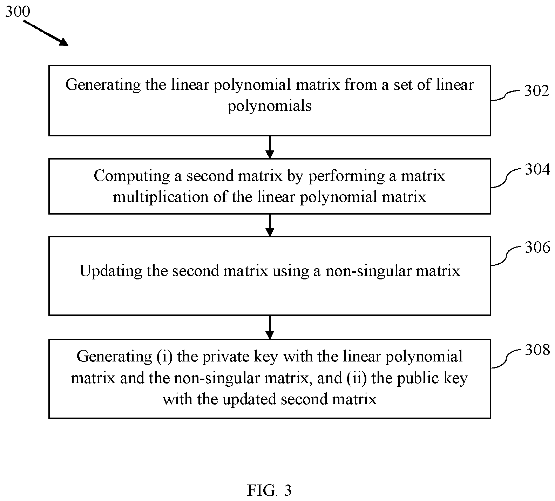

Next at step 206 of the method 200, the one or more hardware processors are configured to generate the public key and a private key for a first party based on (i) a linear polynomial matrix of multi-dimension with the number of variables $(n)$, and (ii) a non-singular matrix of multi-dimension over a finite field $(F_q)$. The linear polynomial matrix and the non-singular matrix is of dimension $mxm$. The steps for generating the public key and the private key are explained using FIG. 3. FIG. 3 provides a flow of steps 302 through 308 for generating the public key and the private key. As in FIG. 3, at step 302 the one or more hardware processors are configured to generate the linear polynomial matrix from a set of linear polynomials. The linear polynomial matrix is represented as in equation 1,

$$A = \begin{bmatrix} p_1 & p_2 & \cdots & p_m \\ p_{m+1} & p_{m+2} & \cdots & p_{m+m} \\ \vdots & \vdots & \cdots & \vdots \\ p_{(m-1)m+1} & p_{(m-1)m+2} & \cdots & p_{m^2} \end{bmatrix} \tag{1}$$

The linear polynomial matrix consists of $m^2$ linear polynomials $p_1, p_2, ...., p_{m2}$ in $n$ variables and is arranged a $mxm$ matrix. Each linear polynomial $p_i$ is selected randomly and is represented as $p_{i1}X_1 + p_{i2}X_2 + \cdots .. + p_{in}X_n$ for some constants $p_{i1},...,$ $p_{in}$ selected randomly from finite field ($F_q$).

Further at step 304, the one or more hardware processors are configured to compute a second matrix (F) by performing a matrix multiplication of the linear polynomial matrix. The second matrix (F) is represented as in equation 2,

$$F = A.A = \begin{bmatrix} f_1 & f_2 & \cdots & f_m \\ f_{m+1} & f_{m+2} & \cdots & f_{m+m} \\ \vdots & \vdots & \cdots & \vdots \\ f_{(m-1)m+1} & f_{(m-1)m+2} & \cdots & f_{m^2} \end{bmatrix} \tag{2}$$

Each polynomial $f_1, f_2, ...., f_{m2}$ are obtained from polynomials $p_1, p_2, ...., p_{m2}$ using the rules of matrix multiplication. Since the polynomials $p_1, p_2, ...., p_{m2}$ are linear $f_1, f_2, ...., f_{m2}$ are quadratic polynomials in same variables.

Further generating the second matrix ($F$), at step 306, the one or more hardware processors are configured to update the second matrix ($F$) using a non-singular matrix. The non-singular matrix is generated randomly and is of dimension $mxm$. The non-singular matrix is represented as in equation 3,

$$L_2 = \begin{bmatrix} l_1 & l_2 & \cdots & l_m \\ l_{m+1} & l_{m+2} & \cdots & l_{m+m} \\ \vdots & \vdots & \cdots & \vdots \\ l_{(m-1)m+1} & l_{(m-1)m+2} & \cdots & l_{m^2} \end{bmatrix} \tag{3}$$

The F matrix is updated using this non-singular matrix to $\hat{F}$ and is represented as $\hat{F} = L_2^{-1}.F.L_2$. The updated second matrix ($\hat{F}$) is represented in matrix as,

$$\hat{F} = \begin{bmatrix} l_1 & \cdots & l_m \\ l_{m+1} & \cdots & l_{m+m} \\ \vdots & \cdots & \vdots \\ l_{(m-1)m+1} & \cdots & l_{m^2} \end{bmatrix}^{-1} \begin{bmatrix} f_1 & \cdots & f_m \\ f_{m+1} & \cdots & f_{m+m} \\ \vdots & \cdots & \vdots \\ f_{(m-1)m+1} & \cdots & f_{m^2} \end{bmatrix} \begin{bmatrix} l_1 & \cdots & l_m \\ l_{m+1} & \cdots & l_{m+m} \\ \vdots & \cdots & \vdots \\ l_{(m-1)m+1} & \cdots & l_{m^2} \end{bmatrix}$$

$$(4)$$

where $L_2^{-1}$ is the inverse of matrix $L_2$ computed using the general matrix theory.

Further at step 308, the one or more hardware processors are configured to generate (i) the private key from the linear polynomial matrix and the non-singular matrix, and (ii) the public key from the updated second matrix. The private key and public key are represented as *PrivKey* = (*A*, *L₂*) and *PubKey* = ($\hat{F}$) respectively.

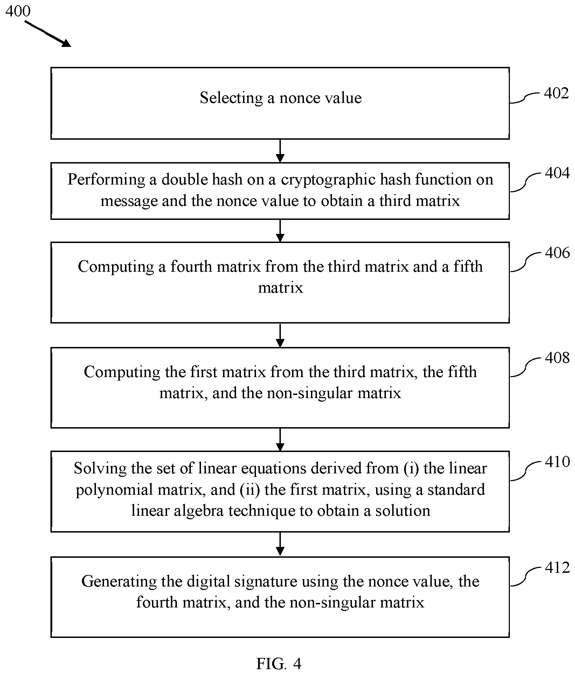

Further generating the private key and public key using the steps 302 through 308, at step 208 of the method 200, the one or more hardware processors are configured to generate a digital signature on a message (*M*) for the first party using the generated private key. *M* can be a file, an Email, or any other such object on which digital signature can be generated. The generation of the digital signature is explained using FIG. 4 with the steps 402 through 412. For generating the digital signature, initially at step 402, the one or more hardware processors are configured to select a nonce value (*r*). The nonce value (*r*) is a non-repeating random string of a pre-defined bitlength depending on the security parameter.

Further at step 404, the one or more hardware processors are configured to perform a double hash on a cryptographic hash function on the message and the nonce value (*r*) to obtain a third matrix (*H*). The double hash is computed as, *HASH(HASH(M) ‖ r)*. A cryptographic hash function such as SHA256 which is denoted as HASH is applied. The third matrix (*H*) is of dimension *mxm* and is denoted as in equation 5,

$$H = \begin{bmatrix} h_1 & \cdots & h_m \\ h_{m+1} & \cdots & h_{m+m} \\ \vdots & \cdots & \vdots \\ h_{(m-1)m+1} & \cdots & h_{m^2} \end{bmatrix} \qquad (5)$$

Further obtaining the third matrix (*H*), at step 406, the one or more hardware processors are configured to compute a fourth matrix (J) from the third matrix (*H*) and a fifth matrix (*R*). The fifth matrix (*R*) is randomly chosen with entries in the finite field and is of dimension *mxm.* The fourth matrix is computed using the equation 6,

$$J = HR + RH + R^2 \qquad (6)$$

and is represented in matrix form as in equation 7,

$$J = \begin{bmatrix} j_1 & \cdots & j_m \\ j_{m+1} & \cdots & j_{m+m} \\ \vdots & \cdots & \vdots \\ j_{(m-1)m+1} & \cdots & j_{m^2} \end{bmatrix} \qquad (7)$$

Further at step 408, the one or more hardware processors are configured to compute the first matrix *(U)* from the third matrix *(H),* the fifth matrix (*R*), and the non-singular matrix. The computation of the first matrix (*U*) is represented as in equation 8,

$$U = L_2.(H + R).L_2^{-1} \qquad (8)$$

The matrix representation of the first matrix (*U*) is shown below in equation 9,

$$U = \begin{bmatrix} u_1 & \cdots & u_m \\ u_{m+1} & \cdots & u_{m+m} \\ \vdots & \cdots & \vdots \\ u_{(m-1)m+1} & \cdots & u_{m^2} \end{bmatrix} \qquad (9)$$

Next at step 410, the one or more hardware processors are configured to solve the set of linear equations derived from (i) the linear polynomial matrix, and (ii) the first matrix ($U$), using a standard linear algebra technique to obtain a solution. The set of linear equations are given as below in equation 10,

$$p_1(X_1, \dots, X_n) = u_1$$
$$p_2(X_1, \dots, X_n) = u_2$$
$$.$$
$$.$$
$$.$$
$$p_{m^2}(X_1, \dots, X_n) = u_{m^2} \qquad (10)$$

These set of linear equations are solved using the standard linear algebra technique like Gaussian elimination. The solution obtained by solving is denoted as $Z = z_1, \dots, z_n$.

Finally, after obtaining the solution, at step 412, the one or more hardware processors are configured to generate the digital signature using the nonce value ($r$), the fourth matrix ($J$), and the non-singular matrix. The digital signature is represented as $\sigma = (r, Z, J)$.

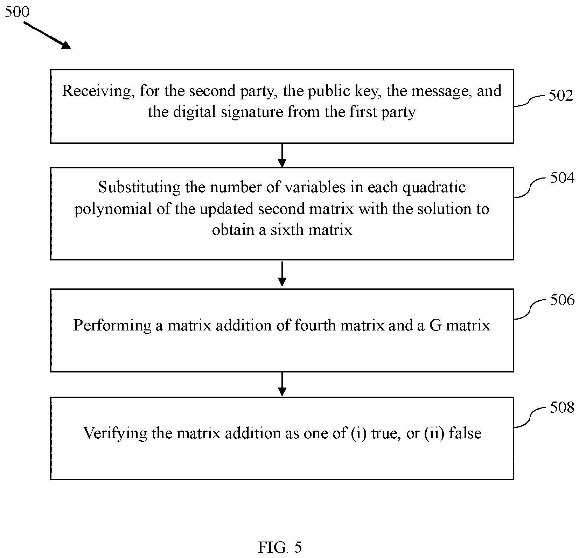

Further generating the digital signature on the message using the steps 402 through 412, at step 210 of the method 200, the one or more hardware processors are configured to verify the digital signature for a second party using the public key by solving a set of quadratic polynomials corresponding to the public key. The verification of the digital signature is explained using the FIG. 5 with the steps 502 through 508.

At step 502, the one or more hardware processors are configured to receive the public key, the message, and the digital signature from the first party for the second party. The public key is represented as *PubKey* = ($\hat{F}$) which is of dimension *mxm* matrix. It is denoted as in equation 11,

$$\hat{F} = \begin{bmatrix} \hat{f}_1 & \cdots & \hat{f}_m \\ \hat{f}_{m+1} & \cdots & \hat{f}_{m+m} \\ \vdots & \cdots & \vdots \\ \hat{f}_{(m-1)m+1} & \cdots & \hat{f}_{m^2} \end{bmatrix} \qquad (11)$$

Each element $\hat{f}_i$ of the matrix $\hat{F}$ is a quadratic polynomial in variables $X = X_1, \dots, X_n$ which is denoted as $d_1 X_1^2 + d_2 X_2^2 + \cdots + e_1 X_1 X_2 + \cdots$ for the constants $d_1, d_2, e_1, \dots$ taken from the finite field ($F_q$).

At step 504, the one or more hardware processors are configured to substitute the number of variables in each quadratic polynomial of the updated second matrix ($\hat{F}$) with the solution to obtain a sixth matrix. In each polynomial $\hat{f}_i$ the substitution of $X_1 = z_1, \dots, X_n = z_n$ is performed and evaluated to obtain the sixth matrix. The sixth matrix is represented as in equation 12,

$$\begin{bmatrix} \hat{f}_1(z_1, \dots, z_n) & \cdots & \hat{f}_m(z_1, \dots, z_n) \\ \hat{f}_{m+1}(z_1, \dots, z_n) & \cdots & \hat{f}_{m+m}(z_1, \dots, z_n) \\ \vdots & \cdots & \vdots \\ \hat{f}_{(m-1)m+1}(z_1, \dots, z_n) & \cdots & \hat{f}_{m^2}(z_1, \dots, z_n) \end{bmatrix} \qquad (12)$$

Further at step 506, the one or more hardware processors are configured to perform a matrix addition of fourth matrix ($J$) and a G matrix. The G matrix is computed using a double hash *HASH(HASH(M) II r)*. The G matrix is of dimension *mxm* and is represented as in equation 13,

$$G = \begin{bmatrix} g_1 & \cdots & g_m \\ g_{m+1} & \cdots & g_{m+m} \\ \vdots & \cdots & \vdots \\ g_{(m-1)m+1} & \cdots & g_{m^2} \end{bmatrix} \qquad (13)$$

Further, a matrix $G^2 = G.G$ is computed using the matrix multiplication rules.
And then the matrix addition $J + G^2$ is computed.

After performing the matrix addition, at step 508, the one or more hardware processors are configured to verify the matrix addition as one of (i) true, or (ii) false. The verification holds to be true if the matrix addition generates the sixth matrix otherwise false. If the verification holds then outputs 1 otherwise outputs 0. Here 1 denotes that verification is successful and 0 denotes verification failure.

The method 200 from steps 202 through 210 is further explained using a use-case example. Let the set of parameters be $q = 31$, $m = 2$, $n = 4$ and $variables = (x_0,...,x_3)$ and signature size $m^2 = 4$. The private key and the public key generated are as follows using the step 206 of the method 200. The private key consists of 4 linear polynomials randomly generated and arranged in a 2x2 matrix.

$$A = \begin{bmatrix} x_0 + x_1 & x_3 - x_1 \\ x_1 - x_2 & x_2 - x_0 \end{bmatrix}$$

The public key is $F = A^2$ and is denoted as,

$$F = \begin{bmatrix} f_{00} & f_{01} \\ f_{10} & f_{11} \end{bmatrix}$$

where,

$$f_{00} = x_0^2 + 2x_0 x_1 + x_1 x_2 + x_1 x_3 - x_2 x_3$$

$$f_{01} = -x_1^2 - x_1 x_2 + x_1 x_3 + x_2 x_3$$

$$f_{10} = x_1^2 - x_2^2 + x_0^2 - x_1^2 + 29$$

$$f_{11} = x_0 x_2 + x_1 x_2 + x_2^2 + x_1 x_3 - x_2 x_3$$

For the digital signature generation, let the message be M and the nonce value r =0. After performing a double hash, the output is [1,2,5,3] and let this be represented as matrix $H = \begin{bmatrix} 1 & 2 \\ 5 & 3 \end{bmatrix}$. A randomly chosen R be $R = \begin{bmatrix} 1 & 2 \\ 5 & 3 \end{bmatrix}$. Check that $HR + RH + R^2 \neq 0$. If not choose a different R. Further solve the set of linear equations given by $A = (H + R)$. That is,

$$\begin{bmatrix} x_0 + x_1 & x_3 - x_1 \\ x_1 - x_2 & x_2 - x_0 \end{bmatrix} = \begin{bmatrix} 3 & 13 \\ -9 & -15 \end{bmatrix} \Rightarrow \begin{array}{cc} x_0 + x_1 = 3 & x_3 - x_1 = 13 \\ x_1 - x_2 = -9 & x_2 - x_0 = -15 \end{array}$$

If these equations have no solution, choose a different R and repeat.
It is seen that $Z = (3,0,16,13,0,22,0,0)$ is a solution and $HR + RH + R^2 = J$ which is,

$$\begin{bmatrix} 5 & 6 \\ -1 & -1 \end{bmatrix} + \begin{bmatrix} -5 & 6 \\ -11 & 11 \end{bmatrix} + \begin{bmatrix} 5 & 10 \\ 7 & 15 \end{bmatrix} = \begin{bmatrix} 5 & -9 \\ -5 & -4 \end{bmatrix}$$

The digital signature is $\sigma = (0, Z, J)$.
For the digital signature verification, compute $HASH(M, r) = H$ and then $H^2$

$$H^2 = \begin{bmatrix} 11 & 8 \\ -11 & -12 \end{bmatrix}$$

Further evaluate public key polynomials $F(X)$ at $Z$:

$$F(Z) = \begin{bmatrix} 16 & 30 \\ 15 & 15 \end{bmatrix}$$

Compute $F(Z) - J$

$$F(Z) = \begin{bmatrix} 16 & 30 \\ 15 & 15 \end{bmatrix} - \begin{bmatrix} 5 & -9 \\ -5 & -4 \end{bmatrix} = \begin{bmatrix} 11 & 8 \\ 20 & 19 \end{bmatrix}$$

Further check modulo 31 of the above matrix is equal to $H^2$ ,implying verification is success.

EXPERIMENTAL RESULTS: Table 1 shows size of public keys and digital signatures which are in bytes for different security levels such as 128 bits, 192 bits and 256 bits. In the digital signature the length of nonce is 16, 24, 32 bytes corresponding to the security level of 128, 192 and 256 bits respectively. The disclosed method has been implemented in C and used libPari version 2.16.x for various libraries related to matrix determinant and kernel calculation. The experiments are performed on a server-class machine with an Intel Core i5 CPU running at 1.70 GHz with 8 cores and 16 GB of RAM. The experiments were run on 8 bytes message. Hash function is performed on the message twice using secure hash algorithm-SHAKE256 algorithm of eXtended Keccak Code Package (XKCP) library, wherein hash is performed on the message for first time and second time and project it on a matrix. Major computation overhead is for matrix kernel calculation for signature generation and matrix multiplication for signature verification.

Table 1

| Field | Security level | ($n$, $m^2$) | Size in bytes | | Security estimate |
| --- | --- | --- | --- | --- | --- |
| | | | **Public key** | **Digital signature** | |
| $F_2$ | 128 bits | 160,144 | 187920 | 52 | Exponential |
| $F_3$ | 128 bits | 104,100 | 136500 | 66 | Exponential |
| | 192 bits | 128,121 | 249744 | 76 | |
| | 256 bits | 176,169 | 658086 | 86 | |

Table 2 shows the implementation results corresponding to Table 1. The timings are in milliseconds.

Table 2

| Field | Security level | ($n$, $m^2$) | Timings in milliseconds | |
| --- | --- | --- | --- | --- |
| | | | **Sign** | **Verify** |
| $F_2$ | 128 bits | 160,144 | 12 | 0.995 |
| $F_3$ | 128 bits | 104,100 | 1.3 | 0.67 |
| | 192 bits | 128,121 | 1.7 | 1 |
| | 256 bits | 176,169 | 2.5 | 1.7 |

The table 1 and table 2 are shown for some sets of parameters. However, any set of parameters can be used. However, the timings shown in table 2 would vary when processors of different performances are used. Further table 3 shows a comparison of sizes of digital signatures generated using the disclosed method with that of prior technique MAYO (https://pqmayo.org/params-times/). Since MAYO keeps on updating the technique for generating the digital signature, with the current state of MAYO table 3 shows that the size of digital signature generated using the disclosed method is very less as compared to that of MAYO.

Table 3

| Security Level | Digital Signature size (bytes) | |
| --- | --- | --- |
| | **Mayo** | **Disclosed method** |
| 128 bits | 321 | 66 |
| 192 bits | 577 | 76 |

(continued)

| Security Level | Digital Signature size (bytes) | |
|---|---|---|
| | **Mayo** | **Disclosed method** |
| 256 bits | 838 | 86 |

The embodiments of the present disclosure provide a method for generating digital signatures using polynomial matrices. The digital signatures generated are small. The method uses multivariate polynomial matrices for the generation of public key and private keys. And further to generate the digital signature on a message. The disclosed method uses mathematical problems which are hard to solve on large quantum computers. Solving a system of quadratic polynomials defined over finite field is one such problem. It is a known fact that MQ problem is NP-complete and hard to solve on quantum computer. The disclosed method is based on the MQ problem and hence it is quantum secure.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.  A processor implemented method (200) comprising:

    receiving, via one or more hardware processors, a security parameter characterizing a level of security expected from a digital signature to be generated (202);

    determining, via the one or more hardware processors, a set of parameters based on the security parameter, wherein the set of parameters comprising a power of a prime number ($q$), a number of variables ($n$), and a number of quadratic polynomials ($m^2$) in a public key (204);

    generating, via the one or more hardware processors, the public key, and a private key for a first party based on (i) a linear polynomial matrix of multi-dimension with the number of variables, and (ii) a non-singular matrix of multi-dimension over a finite field $(F_q)(206)$;

    generating for the first party, via the one or more hardware processors, a digital signature on a message using the generated private key based on solving a set of linear equations corresponding to the linear polynomial matrix with a first matrix (208); and

    verifying, via the one or more hardware processors, the digital signature for a second party using the public key by solving a set of quadratic polynomials corresponding to the public key (210).

2.  The processor implemented method as claim in claimed 1, wherein generating the public key and the private key comprises:

    generating, via the one or more hardware processors, the linear polynomial matrix from a set of linear polynomials, wherein each linear polynomial $p_i$ of the set of linear polynomials, selected randomly, is represented as $P_{i1}X_1 + p_{i2}X_2 + \cdots .. + p_{in}X_n$ for constants $p_{i1},..., p_{in}$ chosen randomly from the finite field $(F_q)$ (302);

    computing, via the one or more hardware processors, a second matrix ($F$) by performing a matrix multiplication of the linear polynomial matrix, wherein the second matrix ($F$) is a quadratic polynomial matrix with a set of quadratic polynomials, and wherein each quadratic polynomial amongst the set of quadratic polynomials is obtained from the set of linear polynomials of the linear polynomial matrix (304);

    updating, via the one or more hardware processors, the second matrix ($F$) using a non-singular matrix, wherein the non-singular matrix is randomly generated (306); and

    generating, via the one or more hardware processors, (i) the private key from the linear polynomial matrix and the non-singular matrix, and (ii) the public key from the updated second matrix (308).

3.  The processor implemented method of claim 1, wherein generating the digital signature on the message comprises:

    selecting, via the one or more hardware processors, a nonce value, wherein the nonce value is a non-repeating random string of a pre-defined bitlength depending on the security parameter (402);

    performing, via the one or more hardware processors, a double hash on a cryptographic hash function on message and the nonce value to obtain a third matrix (H) (404);

    computing, via the one or more hardware processors, a fourth matrix ($J$) from the third matrix ($H$) and a fifth matrix, wherein the fifth matrix is randomly chosen with entries in the finite field $(F_q)$, and wherein the computing of the fourth matrix ($J$) is represented as, $J = HR + RH + R^2$ (406);

    computing, via the one or more hardware processors, the first matrix $(U)$ from the third matrix $(H)$, the fifth matrix, and the non-singular matrix (408);

    solving, via the one or more hardware processors, the set of linear equations derived from (i) the linear polynomial matrix, and (ii) the first matrix ($U$), using a standard linear algebra technique to obtain a solution (410); and

    generating, via the one or more hardware processors, the digital signature using the nonce value, the fourth matrix ($J$), and the non-singular matrix (412).

4.  The processor implemented method of claim 1, wherein verifying the digital signature for the second party comprises:

    receiving for the second party, via the one or more hardware processors, the public key, the message, and the digital signature from the first party (502);

    substituting, via the one or more hardware processors, the number of variables in each quadratic polynomial of the updated second matrix with the solution to obtain a sixth matrix (504);

    performing, via the one or more hardware processors, a matrix addition of fourth matrix ($J$) and a G matrix, wherein the G matrix is computed using a double hash (506); and

    verifying, via the one or more hardware processors, the matrix addition as one of (i) true, or (ii) false, wherein the verification is true if the matrix addition generates the sixth matrix (508).

5. A system (100), comprising:

a memory (104) storing instructions;
one or more communication interfaces (106); and
one or more hardware processors (102) coupled to the memory (104) via the one or more communication interfaces (106), wherein the one or more hardware processors (102) are configured by the instructions to:

receive a security parameter characterizing a level of security expected from a digital signature to be generated;
determine a set of parameters based on the security parameter, wherein the set of parameters comprising a power of a prime number (q), a number of variables $(n)$, and a number of quadratic polynomials $(m^2)$ in a public key;
generate the public key, and a private key for a first party based on (i) a linear polynomial matrix of multi-dimension with the number of variables, and (ii) a non-singular matrix of multi-dimension over a finite field $(F_q)$;
generate for the first party a digital signature on a message using the generated private key based on solving a set of linear equations corresponding to the linear polynomial matrix with a first matrix; and
verify the digital signature for a second party using the public key by solving a set of quadratic polynomials corresponding to the public key.

6. The system of claim 5, wherein generating the public key and the private key comprises:

generating the linear polynomial matrix from a set of linear polynomials, wherein each linear polynomial $p_i$ of the set of linear polynomials, selected randomly, is represented as $p_{i1} X_1 + p_{i2} X_2 + \cdots .. + p_{in} X_n$ for constants $p_{i1}, ..., p_{in}$ chosen randomly from the finite field $(F_q)$;
computing a second matrix $(F)$ by performing a matrix multiplication of the linear polynomial matrix, wherein the second matrix $(F)$ is a quadratic polynomial matrix with a set of quadratic polynomials, and wherein each quadratic polynomial amongst the set of quadratic polynomials is obtained from the set of linear polynomials of the linear polynomial matrix;
updating the second matrix $(F)$ using a non-singular matrix, wherein the non-singular matrix is randomly generated; and
generating (i) the private key from the linear polynomial matrix and the non-singular matrix, and (ii) the public key from the updated second matrix.

7. The system of claim 5, wherein generating the digital signature on the message comprises:

selecting a nonce value, wherein the nonce value is a non-repeating random string of a pre-defined bitlength depending on the security parameter;
performing a double hash on a cryptographic hash function on message and the nonce value to obtain a third matrix $(H)$;
computing a fourth matrix $(J)$ from the third matrix $(H)$ and a fifth matrix, wherein the fifth matrix is randomly chosen with entries in the finite field $(F_q)$, and wherein the computing of the fourth matrix $(J)$ is represented as,

$$J = HR + RH + R^2;$$

computing the first matrix $(U)$ from the third matrix $(H)$, the fifth matrix, and the non-singular matrix;
solving the set of linear equations derived from (i) the linear polynomial matrix, and (ii) the first matrix $(U)$, using a standard linear algebra technique to obtain a solution; and
generating the digital signature using the nonce value, the fourth matrix $(J)$, and the non-singular matrix.

8. The system of claim 5, wherein verifying the digital signature for the second party comprises:

receiving for the second party the public key, the message, and the digital signature from the first party;
substituting the number of variables in each quadratic polynomial of the updated second matrix with the solution to obtain a sixth matrix;

performing a matrix addition of fourth matrix ($J$) and a G matrix, wherein the G matrix is computed using a double hash; and

verifying the matrix addition as one of (i) true, or (ii) false, wherein the verification is true if the matrix addition generates the sixth matrix.

**9.** One or more non-transitory machine-readable information storage mediums comprising one or more instructions which when executed by one or more hardware processors cause:

receiving a security parameter characterizing a level of security expected from a digital signature to be generated;

determining a set of parameters based on the security parameter, wherein the set of parameters further comprising a power of a prime number ($q$), a number of variables ($n$), and a number of quadratic polynomials ($m^2$) in a public key;

generating the public key, and a private key for a first party based on (i) a linear polynomial matrix of multi-dimension with the number of variables, and (ii) a non-singular matrix of multi-dimension over a finite field ($F_q$);

generating for the first party a digital signature on a message using the generated private key based on solving a set of linear equations corresponding to the linear polynomial matrix with a first matrix; and

verifying the digital signature for a second party using the public key by solving a set of quadratic polynomials corresponding to the public key.

**10.** The one or more non-transitory machine-readable information storage mediums of claim 9, wherein generating the public key and the private key comprises:

generating the linear polynomial matrix from a set of linear polynomials, wherein each linear polynomial $p_i$ of the set of linear polynomials, selected randomly, is represented as $P_{i1}X_1 + p_{i2}X_2 + \cdots .. + p_{in}X_n$ for constants $p_{i1},..., p_{in}$ chosen randomly from the finite field ($F_q$);

computing a second matrix ($F$) by performing a matrix multiplication of the linear polynomial matrix, wherein the second matrix ($F$) is a quadratic polynomial matrix with a set of quadratic polynomials, and wherein each quadratic polynomial amongst the set of quadratic polynomials is obtained from the set of linear polynomials of the linear polynomial matrix;

updating the second matrix ($F$) using a non-singular matrix, wherein the non-singular matrix is randomly generated; and

generating (i) the private key from the linear polynomial matrix and the non-singular matrix, and (ii) the public key from the updated second matrix.

**11.** The one or more non-transitory machine-readable information storage mediums of claim 9, wherein generating the digital signature on the message comprises:

selecting a nonce value, wherein the nonce value is a non-repeating random string of a pre-defined bitlength depending on the security parameter;

performing a double hash on a cryptographic hash function on message and the nonce value to obtain a third matrix (H);

computing a fourth matrix ($J$) from the third matrix ($H$) and a fifth matrix, wherein the fifth matrix is randomly chosen with entries in the finite field ($F_q$), and wherein the computing of the fourth matrix ($J$) is represented as,

$$J = HR + RH + R^2;$$

computing the first matrix ($U$) from the third matrix ($H$), the fifth matrix, and the non-singular matrix;

solving the set of linear equations derived from (i) the linear polynomial matrix, and (ii) the first matrix ($U$), using a standard linear algebra technique to obtain a solution; and

generating the digital signature using the nonce value, the fourth matrix ($J$), and the non-singular matrix.

**12.** The one or more non-transitory machine-readable information storage mediums of claim 9, wherein verifying the digital signature for the second party comprises:

receiving for the second party the public key, the message, and the digital signature from the first party;

substituting the number of variables in each quadratic polynomial of the updated second matrix with the solution to obtain a sixth matrix;

performing a matrix addition of fourth matrix (*J*) and a G matrix, wherein the G matrix is computed using a double hash; and
verifying the matrix addition as one of (i) true, or (ii) false, wherein the verification is true if the matrix addition generates the sixth matrix.

SYSTEM 100

HARDWARE PROCESSOR(S) 102

MEMORY 104

I/O INTERFACE(S) 106

FIG. 1

200

Receiving a security parameter characterizing a level of security expected from a digital signature to be generated ⟋ 202

Determining a set of parameters based on the security parameter ⟋ 204

Generating a public key and a private key for a first party ⟋ 206

Generating a digital signature on a message for the first party using the generated private key ⟋ 208

Verifying the digital signature for a second party using the public key by solving a set of quadratic polynomials corresponding to the public key ⟋ 210

FIG. 2

300

Generating the linear polynomial matrix from a set of linear polynomials — 302

Computing a second matrix by performing a matrix multiplication of the linear polynomial matrix — 304

Updating the second matrix using a non-singular matrix — 306

Generating (i) the private key with the linear polynomial matrix and the non-singular matrix, and (ii) the public key with the updated second matrix — 308

FIG. 3

400

Selecting a nonce value ⟋— 402

Performing a double hash on a cryptographic hash function on message and the nonce value to obtain a third matrix ⟋— 404

Computing a fourth matrix from the third matrix and a fifth matrix ⟋— 406

Computing the first matrix from the third matrix, the fifth matrix, and the non-singular matrix ⟋— 408

Solving the set of linear equations derived from (i) the linear polynomial matrix, and (ii) the first matrix, using a standard linear algebra technique to obtain a solution ⟋— 410

Generating the digital signature using the nonce value, the fourth matrix, and the non-singular matrix ⟋— 412

FIG. 4

500

| Receiving, for the second party, the public key, the message, and the digital signature from the first party | 502 |

| Substituting the number of variables in each quadratic polynomial of the updated second matrix with the solution to obtain a sixth matrix | 504 |

| Performing a matrix addition of fourth matrix and a G matrix | 506 |

| Verifying the matrix addition as one of (i) true, or (ii) false | 508 |

FIG. 5

Europäisches Patentamt
European Patent Office
Office européen des brevets

# EUROPEAN SEARCH REPORT

Application Number

EP 25 16 3575

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IKEMATSU YASUHIKO ET AL: "Revisiting the security analysis of SNOVA", , 22 January 2024 (2024-01-22), pages 54-61, XP093290956, Retrieved from the Internet: URL:https://eprint.iacr.org/2024/096.pdf> * section 2.1 * | 1-12 | INV. H04L9/30 H04L9/32 |
| X | WARD BEULLENS: "MAYO: Practical Post-Quantum Signatures from Oil-and-Vinegar Maps", IACR, INTERNATIONAL ASSOCIATION FOR CRYPTOLOGIC RESEARCH , vol. 20220825:140847 25 August 2022 (2022-08-25), pages 1-21, XP061075507, Retrieved from the Internet: URL:https://eprint.iacr.org/archive/2021/1144/1661436527.pdf [retrieved on 2022-08-25] * section 6; figure 2 * | 1-12 | |

TECHNICAL FIELDS SEARCHED (IPC)

H04L

The present search report has been drawn up for all claims

| Place of search | Date of completion of the search | Examiner |
|---|---|---|
| Munich | 4 July 2025 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Patent documents cited in the description**

- IN 202421019145